# EUROPÄISCHE PATENTSCHRIFT

(11) **EP 0 528 058 B1**
(45) Veröffentlichungstag und Bekanntmachung des Hinweises auf die Patenterteilung: **28.02.1996**
(21) Anmeldenummer: 91113467.4
(22) Anmeldetag: 09.08.1991
(51) Int. Cl.: B23B 5/28

(54) **Verfahren zur zerspanenden Bearbeitung eines von Reibrollen angetriebenen Radsatzes**
Method for machining a wheel set driven by friction rolls
Procédé pour l'usinage d'un train de roues entraîné par des anneaux de friction

(43) Veröffentlichungstag der Anmeldung: 24.02.1993
(73) Patentinhaber: Wilhelm Hegenscheidt Gesellschaft mbH, D-41804 Erkelenz (DE)
(72) Erfinder: Feldewert, Herbert Dipl.-Ing., W-5140 Erkelenz (DE)
(74) Vertreter: Aubele, Karl B.

(56) Entgegenhaltungen:
- DE-A- 2 021 820

## Beschreibung

Die Erfindung betrifft ein Verfahren zur zerspanenden Bearbeitung eines in Zentriermitteln aufgenommenen und über an der Umfangsfläche eines Rades angelegte Reibrollen angetriebenen Radsatzes.

In der nachfolgenden Beschreibung soll der Begriff "Reibrolle" sowohl solche Rollen bezeichnen, mit denen ein Rad eines Radsatzes angetrieben wird, als auch solche Rollen, auf denen sich das Rad eines Radsatzes abstützt.

Verfahren der eingangs beschriebenen Art sind z.B. bekannt geworden aus der DE-OS 3931747 oder der DE-PS 3809250. Für eine Reprofilierung wird ein Radsatz mittels an die Lauffläche eines Rades angelegter Reibrollen, die radialen Lageveränderungen der Lauffläche folgen können, angetrieben. Hierbei wird der Werkstoff unter den Rollen weggedreht bis zu einer Übergangszone. Bei der weiteren Zerspanung kommt dann der bereits reprofilierte Teil der Lauffläche zur Anlage an die Reibrolle, so daß dort weiter angetrieben werden kann. Dieser Übergang ist bekannt und bewährt und kann z.B. entnommen werden aus der DE-PS 4001793, Figuren 3, 4, 6, 8, 10 und 12 mit zugehörigen Beschreibungsteilen. Mit diesem Verfahren gelingt es, einen durchgehenden, unterbrechungsfreien Schnitt durchzuführen. Die Erfahrung zeigt jedoch, daß von solchen Reibrollen häufig Drehspäne in die reprofilierte Oberfläche der Räder eingewalzt werden und dort unzulässige Markierungen erzeugen.

Weiter sind mit der DE-PS 1286371 und der DE-AS 1124782 Einrichtungen bekannt geworden, bei denen die Radsätze an den Rädern mit Reibrollen abgestützt und angetrieben werden, die während einer Laufflächenbearbeitung am Spurkranz antreiben und nachfolgend umgesetzt werden, um bei der sich anschließenden Spurkranzbearbeitung an der Lauffläche anzutreiben. Der Radsatz ist hierbei auf den Rollen spitzenlos gelagert. Die Rollen selbst sind in Bearbeitungsposition starr angeordnet. Beim Laufflächenatrieb besteht wieder die Gefahr des Einwalzens von Spänen.

Der Erfindung liegt somit die Aufgabe zugrunde, ein Verfahren der eingangs beschriebenen Art vorzuschlagen, mitdem Späne nicht mehr eingewalzt werden und mit dem dennoch ohne Umsetzen von Rollen ein durchgehender Bearbeitungszyklus erreicht wird. Mit durchgehendem Bearbeitungszyklus ist ein durchgehender Schnitt beginnend an der Außenseite eines Rades mindestens bis zum höchsten Punkt der Spurkranzkuppe gemeint.

Diese Aufgabe ist dadurch gelöst, daß der Radsatz von mindestens einer an den Spurkranz mindestens eines Rades eines Radsatzes mit Anlagekraft angelegten Reibrolle, die unter Anlagekraft radialen Lageveränderungen der jeweils momentanen Kontaktfläche folgen kann, angetrieben wird, während mindestens ein mit einem Drehwerkzeug durchgeführter Reprofilierungsschnitt von der dem Spurkranz abgewandten Stirnfläche eines Rades ohne Unterbrechung mindestens bis zum höchsten Punkt der durch die Reprofilierung zu erzeugenden Spurkranzkuppe geführt wird, worauf die Restzerspanung am Spurkranz durchgeführt wird. Bei Verwendung einer Reibrolle, die ein Rad eines Radsatzes am Spurkranz antreibt, besteht keinerlei Gefahr mehr des Einwalzens von Spänen zwischen einer Umfangsfläche der Reibrolle und einer bereits reprofilierten Umfangsfläche des Rades eines Radsatzes. Mit dem Begriff "Umfangsfläche des Rades" ist im wesentlichen gemeint die Lauffläche, die Oberfläche des Spurkranzes und die Verbindungsfläche zwischen diesen beiden Flächen. Die Beweglichkeit der Reibrollen, die an sich bereits bekannt ist, erlaubt es nunmehr auch solchen Reibrollen, die ein Rad am Spurkranz antreiben, den radialen Lageveränderungen der momentanen Kontaktfläche zu folgen. Der Radsatz bleibt in den Zentriermitteln, die z.B. Körnerspitzen aber auch die in der Maschine an richtiger Stelle gehaltenen Achslagerkästen selbst sein können, sauber zentriert. Rundlauffehler einer Umfangsfläche des Rades, die mit der Reibrolle in Kontakt kommt, haben keine Auswirkungen mehr, weil die besagte Reibrolle solchen Rundlauffehlern folgen kann. Gleichzeitig wird es hierdurch trotz der Verwendung von "Spurkranzrollen" möglich, das Profil wieder, sofern es die notwendige Spantiefe für eine Reprofilierung erlaubt, in einem einzigen Zuge ohne Unterbrechung mindestens bis zum höchsten Punkt der Spurkranzkuppe zu reprofilieren. Falls die Spantiefe für einen einzigen durchgehenden Schnitt zu groß ist, wird eine Schnittaufteilung vorgenommen derart, daß mit einem ersten Schnitt in den Bereichen mit größten Spantiefen gedreht und sodann mit einem weiteren, nunmehr vollständig durchgehenden Schnitt das korrekte Profil wieder hergestellt wird. Beim Antrieb mit Laufflächenantriebsrollen ist diese Vorgehensweise an sich bekannt. Mit den vorgeschlagenen Verfahrensmaßnahmen gelingt es, das unerwünschte Einwalzen von Spänen in bereits reprofilierte Umfangsflächen des Rades eines Radsatzes zu vermeiden durch Verwendung von Reibrollen, die am Spurkranz eines Rades anliegen und antreiben und/oder abstützen und es gelingt weiter, trotz der Verwendung solcher am Spurkranz anliegenden Reibrollen, ein vollständiges Profil in einem einzigen durchgehenden Schnitt ohne ein Umsetzen von Reibrollen, und damit zeitsparend, durchzuführen. Da die am Spurkranz anliegenden Reibrollen den Radsatz nicht spitzenlos aufnehmen sondern dieser in Zentriermitteln gehalten ist, können die am Spurkranz anliegenden Reibrollen auch einem kleiner werdenden Spurkranzkuppendurchmesser, wie er sich nach einer entsprechenden Zerspanung einstellt, folgen, so daß der Werkstoff unter den am Spurkranz anliegenden Reibrollen weggeschnitten werden kann. Dennoch behalten die Reibrollen stets ausreichenden Antriebskontakt oder Stützkontakt zum Rad. In diesem Bereich kann außerdem die Anpreßkraft der Reibrollen wegen der geringeren abverlangten Zerspanungsleistung deutlich verringert werden, so daß irgendwelche Probleme, die aus einer evtl. Plastifizierung des Radwerkstoffes im Bereich des Kontaktes mit der Reibrolle entstehen könnten, vermieden werden können.

Nach einer Ausgestaltung des erfindungsgemäßen Verfahrens wird vorgeschlagen, daß die Restzerspanung an der Spurkranzkuppe begonnen und entlang der inneren Spurkranzflanke fortgesetzt wird. Bei dieser Vorgehensweise kann die Schnittbewegung entlang der Kontur des herzustellenden Profils unter Berücksichtigung der Geometrie des Werkzeuges kontinuierlich fortgesetzt werden bis zur vollständigen Umfahrung des herzustellenden Profils. Es ist aber auch möglich, und dies entspricht einem weiteren erfindungsgemäßen Vorschlag, daß die Restzerspanung an der inneren Spurkranzflanke begonnen und bis zum höchsten Punkt der Spurkranzkuppe hin fortgesetzt wird. Im ersten Teilabschnitt wird das gesamte Profil im Bereich der Lauffläche und des Spurkranzes einschl. des Übergangsbereiches zwischen Spurkranz und Lauffläche bis zum höchsten Punkt der Spurkranzkuppe durchfahren. An diesem Punkt kann man sich nun entscheiden ob nunmehr von der Innenseite des Rades her die Restzerspanung bis zur Spurkranzkuppe durchgeführt wird, oder ob man, wie bereits erläutert, von der Spurkranzkuppe aus nach innen fährt.

Außerdem wird vorgeschlagen, daß mindestens eine Reibrolle axial so positioniert ist, daß sie zur Anlage an den Spurkranz eines Rades eines Radsatzes gebracht werden kann. Grundsätzlich könnten Reibrollen, mindestens wenn sie nur dem Antrieb dienen sollen, in Umfangsrichtung an beliebiger Stelle der Umfangsfläche eines Rades angeordnet werden.Hierbei besteht nicht an allen Stellen der Umfangsfläche eines Rades eine gleich große Gefahr des Einwalzens von Spänen. In den nicht gefährdeten Bereichen können daher auch herkömmliche Reibrollen, die an den Laufflächen anliegen, verwendet werden. Eine ausführbare und anforderungsgerechte Konstruktion der Maschinen kommt jedoch mit Reibrollen allein in den ungefährdeten Bereichen nicht aus, wohl aber ohne Reibrollen in diesen Bereichen. Wo diese Bereiche liegen, hängt von der jeweiligen konkreten konstruktiven Gestaltung der Maschine ab. Es ist somit für den konkreten Einzelfall möglich, im nicht gefährdeten Bereich eine Reibrolle für die Lauffläche vorzusehen, so daß zwei unterschiedliche Arten von Reibrollen zum Einsatz kommen.

Nach einer Ausgestaltung wird vorgeschlagen, daß bei mindestens einer Reibrolle eine der Soll-Querschnittskontur der Spurkranzkuppe wenigstens angenähert entsprechende Rille zur Aufnahme einer Spurkranzkuppe vorgesehen wird. An sich sind solche Rillen bei Reibrollen, die am Spurkranz anliegen und den Radsatz dort abstützen und/oder antreiben sollen, bekannt. Sie ermöglichen eine gewisse Seitenführung der Räder eines Radsatzes, die jedoch nicht immer erforderlich ist.

Ein anderer Vorschlag sieht vor, daß an der Reibrolle im Querschnitt nur eine halbe Rille ausgebildet wird, so daß der Rillengrund in einen zylindrischen Abschnitt der Reibrolle übergeht. Der übrigbleibende Rillenteil, die im Querschnitt halbe Rille, kann mit seinem bogenförmigen Teil so ausgebildet sein, daß er sich an die reprofilierte Kontur einer Spurkranzflanke bis zur Spurkranzkuppe hin anschmiegt. Hierbei kann die Bauart der Reibrolle so sein, daß sich dieser bogenförmige Teil der halben Rille gegenüber der innern Spurkranzflanke oder gegenüber der äußeren Spurkranzflanke befindet. Es ist auch möglich, mehrere Reibrollen vorzusehen mit unterschiedlichen Lagen dieser halben Rillen. Dadurch, daß die Rille nur halb ausgebildet ist, kann Spurkranzmaterial in Richtung des zylindrischen Teils der Reibrolle ausweichen, was bei hohen Anpreßkräften z.B.während der Laufflächenzerspanung vorteilhaft sein kann. Der sich an den Rillengrund der halben Rille anschließende zylindrische Abschnitt kann sich somit in Richtung des Zwischenraumes zwischen den beiden Rädern eines Radsatzes erstrecken oder auch in umgekehrter Richtung liegen.

Schließlich ist nach einer anderen Weiterbildung der Erfindung noch vorgeschlagen, daß die für den Kontakt mit dem Spurkranz vorgesehenen Oberflächenbereiche der Reibrollen in mindestens Teilen ihrer Breitenerstreckung aufgerauht oder mit einem feilenartigen Profil versehen sind. Hierdurch lassen sich die übertragbaren Antriebskräfte noch steigern.

Die Erfindung soll nun anhand der beigefügten Zeichnungen näher erläutert werden.
Es zeigen:
- Figuren 1 bis 4: eine an den Spurkranz angelegte Reibrolle und ein Bearbeitungswerkzeug in verschiedenen Bearbeitungssituationen
- Figur 5: Vorderansicht einer an sich bekannten Maschine zum Reprofilieren von Radsätzen, jedoch mit Reibrollen für den Spurkranz der Räder eines Radsatzes

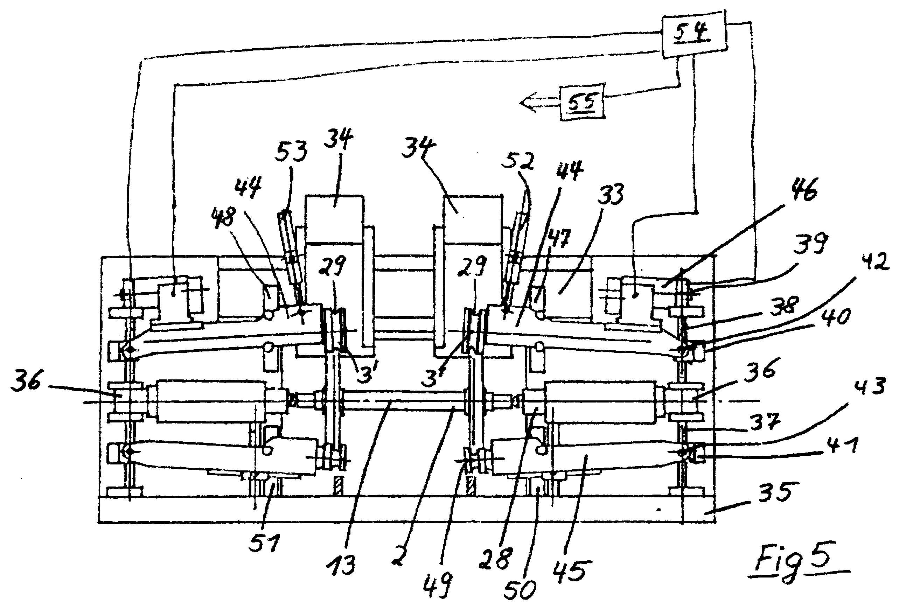

Figur 5 zeigt einen prinzipiellen konstruktiven Aufbau einer Überflurradsatzdrehmaschine. Ein in portalbauweise gebauter Maschinenständer 33 trägt auf der Oberseite des Querbalkens des Portals zwei nebeneinander angeordnete Werkzeugträger 34 in Querführungen, die ihrerseits in entsprechenden Längsführungen am Querbalken des Maschinenständers 33 verschiebbar sind. Die Anordnung von zwei solchen Werkzeugträgern 34 ist nicht zwingend notwendig. Im Prinzip ist ein Werkzeugträger 34 ausreichend. Die Führungsfläche mit den Längsführungen am Querbalken des Maschinenständers 33 kann hierbei schräg angeordnet sein. Der Ständer 33 ist auf einer Fundamentplatte 35 angeordnet. Jeweils an der Frontseite des Maschinenständers 33 in geeigneter Höhe sind Ausleger 36 vorgesehen, die ein nicht näher bezeichnetes Gehäuse tragen, in denen jeweils eine Pinole 28 axial verschieblich angeordnet ist.

Vertikal durch die Ausleger 36 hindurch führt eine durchgehende Gewindespindel mit den Gewindeteilen 37 und 38. Es können jedoch auch diese Gewindeteile 37 bzw. 38 jeweils selbständig sein und mit ihren einen Enden in den Auslegern 36 drehbar gelagert sein. Falls die Gewindespindel durchgehend mit den Gewindeteilen 37 und 38 gebildet ist, so müssen diese Gewindeteile jeweils gegenläufiges Gewinde, also einmal Rechts- und einmal Linksgewinde aufweisen. Die zweiten Enden der genannten Gewindespindeln sind einerseits in der Fundamentplatte 35 drehbar gelagert und andererseits mit einem Antriebsmotor 39 verbunden. Auf den genannten Gewindespindeln sind die Muttern 40 und 41 angeordnet, die jeweils eine senkrecht zur Achse der Gewindespindel und damit auch senkrecht zu einer vertikalen Ebene verlaufende horizontale Achse 42 und 43 aufweisen. An diesen Achsen 42 und 43 ist schwenkbar angeordnet ein Rollenträger 44 und 45. Der Rollenträger 44 weist hierbei einen Hauptantriebsmotor 46 auf, der über nicht näher dargestellte, aberan sich bekannte mechanische Verbindungen derart mit einer Rolle 3', die im Rollenträger 44 drehbar gelagert ist, verbunden ist, daß die Rolle 3' von dem jeweiligen Hauptantriebsmotor 46 angetrieben werden kann. Hierbei können statt einer Rolle 3' auch mehrere solcher Rollen in an sich bekannter Weise vorgesehen sein. Nicht alle dieser mehreren Rollen müssen angetrieben sein.

Jeder Rollenträger 44 ist in horizontaler Richtung von Führungen 47 bzw. 48 abgestützt, so daß diese Rollenträger ausschließlich eine Vertikalbewegung durchführen können. Unterhalb einer horizontalen Ebene durch die Rotationsachse 13, die gleichzeitig die Maschinenmittenachse darstellt, sind zu jedem Rad 1 wiederum Rollenträger 45 vorgesehen. Auch diese Rollenträger 45 sind um horizontale Achsen 43 schwenkbar. Am freien Ende weisen diese Rollenträger 45 z.B. zwei Stützrollen 49 auf. Auch diese Rollenträger 45 sind wiederum über seitliche Führungen 50 und 51 geführt, so daß sie nur eine Vertikalbewegung durchführen können. Die als Stützrollen wirkenden Reibrollen 49 weisen hierbei ebenso wie die Reibrollen 3', die als Antriebsrollen arbeiten könne, eine der Spurkranzquerschnittsform eines Spurkranzes mit korrektem Profil angepaßte Rille auf, in welcher der Spurkranz eines Rades eines Radsatzes laufen kann, so daß er dort sowohl abgesützt als auch angetrieben werden kann.Für die notwendige Anpreßkraft der Reibrollen 3' sorgen hierbei Hydraulikzylinder 52 und 53. Wegen der schwenkbaren Aufhängung der Reibrolle 3' zusammen mit dem Rollenträger 44 kann diese evtl. Exzentrizitäten oder Formfehlern des Rades folgen. Gleiches gilt für die Reibrollen 49, die im Rollenträger 45, der nach Einstellung jedoch ortsfest ist, in einem schwenkbaren und hydraulisch betätigbaren Hebel gelagert sind.Da der grundsätzliche Aufbau solcher Maschinen sehr detailliert in der DE-OS 39 31 147 beschrieben ist, sei der Einfachheit halber hierauf verwiesen. Die Steuerung und Betätigung der Maschine wird von der Maschinensteuerung 54 und von der Hydraulikeinheit 55 übernommen. Auch dies ist bekannt.

Es sei ausdrücklich darauf hingewiesen, daß das erfindungsgemäße Verfahren an allen Radsatzbearbeitungsmaschinen mit Reibrollenantrieb verwendet werden kann. Es ist lediglich notwendig, z.B bei dem bekannten Unterflur- oder Überflurradsatzdrehmaschinen, bei denen die Reibrollen entsprechend beweglich geführt sind, die bisherigen Reibrollen auszutauschen gegen solche Reibrollen, die am Spurkranz abstützen und/oder antreiben können. Nach einer solchen Änderung kann mit der bekannten Maschine mit den geänderten Reibrollen das erfindungsgemäße Verfahren durchgeführt werden.

Die weiteren Darstellungen zeigen der Einfachheit halber nur noch eine Reibrolle, den Ausschnitt eines Rades eines Radsatzes und ein Drehwerkzeug in Kombination jeweils in einer anderen Bearbeitungssituation.

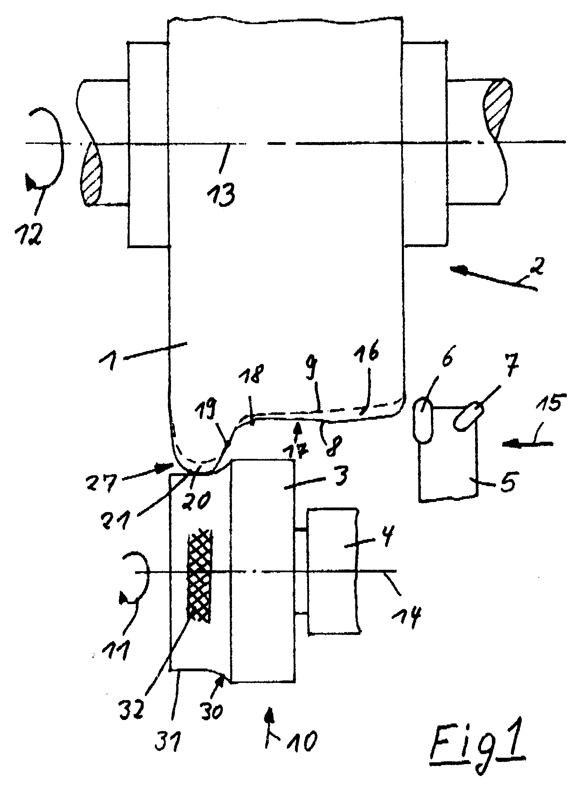

Figur 1 stellt ein Rad eines Radsatzes 2 dar, an das eine Reibrolle 3 unter Kraft angelegt ist. Der Radsatz ist in nicht dargestellten Mitteln gehalten und zentriert. Dies können z.B. die Pinolen 28 nach Figur 5 sein. Die Reibrolle 3 ist in einem Rollenträger, der der Rollenträger 44 nach Figur 5 sein könnte, drehbar und antreibbar gelagert. Ein Drehwerkzeug 5 mit den Schneidplatten 6 und 7 ist neben dem Rad 1 dargestellt und kann getragen werden z.B. von den Werkzeugträgern 34 nach Figur 5. Dieses Drehwerkzeug 5 ist zur Darstellung des Arbeitsablaufs in der Ebene der Reibrolle 3 dargestellt; es kann sich auch oberhalb des Rades, wie schon bekannt, befinden.

Dieses als Drehwerkzeug 5 ausgebildete Bearbeitungswerkzeug befindet sich am Beginn eines Bearbeitungsablaufes. Die Profilkontur 8, welche die Ist-Kontur ist, ist verschlissen und soll durch eine Reprofilierung durch Drehen erneuert werden.Die gestrichelte Kontur 9 zeigt die durch Drehen zu erzeugende neue Kontur, welche die Soll-Kontur ist. Die als Antriebsrolle arbeitende Reibrolle 3 ist unter Kraft, deren Richtung etwa der Pfeilrichtung 10 entspricht, an das Rad 1 angelegt und rotiert beim Reprofilierungsvorgang in der durch den Pfeil 11 angegebenen Richtung um die Rotationsachse 14. Das Rad 1 wird nun durch die Reibrolle 3 in der durch den Pfeil 12 angegebenen Richtung rotierend angetrieben und rotiert um die Rotationsachse 13.Die Reibrolle 3 weist als Rolle für den Spurkranz im Querschnitt nur die Hälfte der Rille 29 der Reibrolle 3' auf. Am Rillengrund mündet der Bogen der halben Rille in einen zylindrischen Abschnitt der Reibrolle 3.

Der Vorschub des Drehwerkzeuges 5 verläuft bei der Reprofilierung in der angegebenen Pfeilrichtung 15 derart, daß die Kontur 9 als neue Kontur, die einer Soll-Kontur entspricht, erzeugt wird. Bei diesem Reprofilierungsschnitt wird der überflüssige Werkstoff 16 im Bereich der Lauffläche 17,der Spurkranzkehle 18 und äußeren Spurkranzflanke 19 bis etwa zur Spurkranzkuppe 20 zerspant. In dieser Darstellung ist ersichtlich, daß ein Einwalzen von Drehspänen, auch von kurzgebrochenen Spänen, in die Lauffläche nicht möglich ist, weil der Kontaktbereich 21 zwischen Reibrolle 3 und Rad 1 an die Spurkranzkuppe 20 verlegt ist.

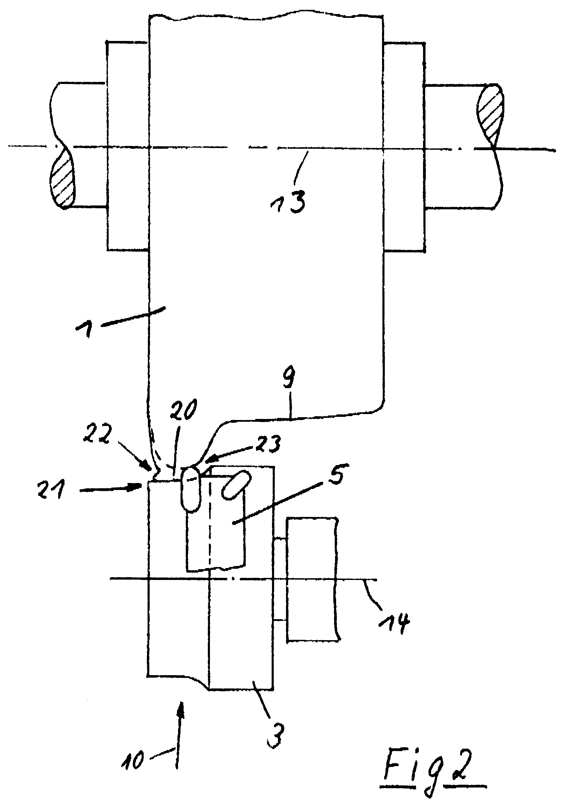

In Figur 2 ist das Rad 1 mit dem Drehwerkzeug 5 im Bereich der Spurkranzkuppe 20 dargestellt und der in Figur 1 noch vorhandene Werkstoff 16 ist von der Schneidplatte 6 des Drehwerkzeuges 5 zerspant worden. Während dieses Bearbeitungsvorganges erfolgt der Antrieb des Rades 1 an der Spurkranzkuppe 20.In Figur 2 erfolgt nun die Zerspanung im Bereich der Spurkranzkuppe 20. Sobald der Kontaktbereich 21 durch die Zerspanung an Breite abnimmt, kann die noch zu profilierende Spurkranzkuppe von der Reibrolle 3 walzend in Richtung der von dem Drehwerkzeug abgewandten Seite verformt werden und es bildet sich wieder eine breitere Kontaktfläche, die zur inneren Spurkranzflanke 22 hin verschoben ist, aus. Diese Verformung ist möglich, weil die als Antriebsrolle wirkende Reibrolle 3 und auch evtl.vorhandene und als Stütztrollen wirkende Reibrollen in ihrer Bewegung in Pfeilrichtung 10 nicht blockiert sind und dem Schnitt des Bearbeitungswerkzeuges in Richtung des Rades 1 bzw. in Pfeilrichtung 10 folgen können. Es erfolgt ein stoßfreier Übergang von der zum verschlissenen Profil gehörenden Spurkranzkuppe zur neu profilierten Spurkranzkuppe.

Der gewalzte Werkstoff der Spurkranzkuppe wird von dem im zylindrischen Teil der Reibrolle 3, wenn dieser zylindrische Teil mit seiner Rotationsachse 14 parallel zur Rotationsachse 13 verläuft, zylindrisch gewalzt. Späne, die in diesem Bereich der Reprofilierung erzeugt werden, können auch im Bereich der Spurkranzkuppe nicht in die neu gedrehte Kontur 9 eingewalzt werden, da, wie in Figur 2 ersichtlich, ein Spalt 23 zwischen der Reibrolle 3 und dem Rad 1 vorliegt.

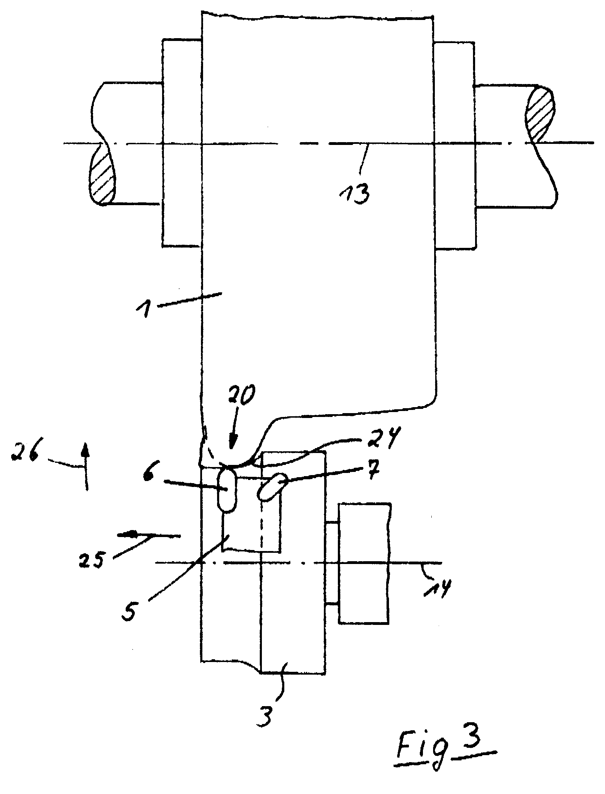

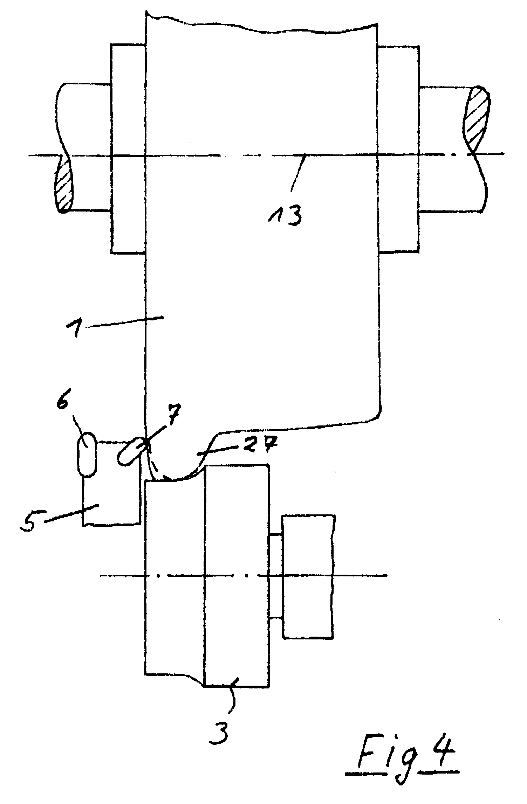

In Figur 3 ist die neu gedrehte Spurkranzkuppe 20 vom Drehwekzeug 5 hergestellt und die innere Spurkranzflanke läuft an der Reibrolle mindestens teilweise im Bereich der bogenförmigen Rollenkontur 24 an. Das Drehwerkzeug 5 fährt nun in Richtung der Pfeile 25 und 26 bis es die in Figur 4 gezeigte Position einnimmt und die Schneidplatte 7 an der inneren Spurkranzflanke 22 spanend angreifen kann. Das Drehwerkzeug 5 zerspant nun den überflüssigen Werkstoff 27 bis zur gestrichelt dargestellten Kontur.

Es besteht aber auch die Möglichkeit, daß das Drehwerkzeug sich in Richtung der Pfeile 25 und 26 bewegend mit der Schneidplatte 7 den Werkstoff 27 abspant und die Zerspanung beendet ist in der in Figur 4 dargestellten Position des Bearbeitungswerkzeugs 5. Wie die Schneidplatte 7 bewegt werden muß, um dies zu erreichen, ist offensichtlich und muß daher nicht näher beschrieben werden.

### Liste der verwendeten Bezugszeichen

- 1: Rad
- 2: Radsatz
- 3: Reibrolle
- 4: Bauteil
- 5: Drehwerkzeug
- 6: Schneidplatte
- 7: Schneidplatte
- 8: Profilkontur
- 9: Kontur
- 10: Pfeilrichtung
- 11: Pfeil
- 12: Pfeil
- 13: Rotationsachse
- 14: Rotationsachse
- 15: Pfeilrichtung
- 16: Werkstoff
- 17: Lauffläche
- 18: Spurkranzkehle
- 19: Spurkranzflanke
- 20: Spurkranzkuppe
- 21: Kontaktbereich
- 22: innere Spurkranzflanke
- 23: Spalt
- 24: Rollenkontur
- 25: Pfeilrichtung
- 26: Pfeilrichtung
- 27: Spurkranz
- 28: Zentriermittel
- 29: Rille
- 30: halbe Rille
- 31: zylindrischer Abschnitt
- 32: feilenartiges Profil
- 33: Maschinenständer
- 34: Werkzeugträger
- 35: Fundamentplatte
- 36: Ausleger
- 37: Gewindeteile
- 38: Gewindeteile
- 39: Antriebsmotor
- 40: Mutter
- 41: Mutter
- 42: horizontale Achse
- 43: horizontale Achse
- 44: Rollenträger
- 45: Rollenträger
- 46: Hauptantriebsmotor
- 47: Führung
- 48: Führung
- 49: Stützrollen
- 50: Führung
- 51: Führung
- 52: Hydraulikzylinder
- 53: Hydraulikzylinder
- 54: Maschinensteuerung
- 55: Hydraulikeinheit

## Patentansprüche

1. Verfahren zur zerspanenden Bearbeitung eines in Zentriermitteln aufgenommenen und über an der Umfangsfläche eines Rades angelegte Reibrollen angetriebenen Radsatzes, dadurch gekennzeichnet, daß der Radsatz (2) von mindestens einer an den Spurkranz (27) mindestens eines Rades (1) eines Radsatzes (2) mit Anlagekraft angelegten Reibrolle (3), die unter Anlagekraft radialen Lageveränderungen der jeweils momentanen Kontaktfläche folgen kann, angetrieben und/oder abgestützt wird, während mindestens ein mit einem Drehwerkzeug (5) durchgeführter Reprofilierungsschnitt von der dem Spurkranz (27) abgewandten Stirnfläche eines Rades (1) ohne Unterbrechung mindestens bis zum höchsten Punkt der durch die Reprofilierung zu erzeugenden Spurkranzkuppe (20) geführt wird, worauf die Restzerspanung am Spurkranz (27) durchgeführt wird.

2. Verfahren nach Anspruch 1, dadurch gekennzeichnet, daß die Restzerspanung an der Spurkranzkuppe (20) begonnen und entlang der inneren Spurkranzflanke (22) fortgesetzt wird.

3. Verfahren nach Anspruch 1, dadurch gekennzeichnet, daß die Restzerspanung an der inneren Spurkranzflanke (22) begonnen und bis zum höchsten Punkt der Spurkranzkuppe (20) hin fortgesetzt wird.

4. Verfahren nach einem der Ansprüche 1 bis 3, dadurch gekennzeichnet, daß mindestens eine Reibrolle axial so positioniert ist, daß sie zur Anlage an den Spurkranz (27) gebracht werden kann.

5. Verfahren nach einem der vorhergehenden Ansprüche, dadurch gekennzeichnet, daß bei mindestens einer Reibrolle (3,3') eine der Soll-Querschnittskontur der Spurkranzkuppe (20) wenigstens angenähert entsprechende Rille (29) zur Aufnahme einer Spurkranzkuppe (20) vorgesehen wird.

6. Verfahren nach Anspruch 5, dadurch gekennzeichnet, daß an der Reibrolle (3) im Querschnitt nur eine halbe Rille (30) ausgebildet wird, so daß der Rillengrund in einen zylindrischen Abschnitt (31) der Reibrolle (3) übergeht.

7. Verfahren nach Anspruch 6, dadurch gekennzeichnet, daß der sich an den Rillengrund anschließende zylindrische Abschnitt (31) mindestens einer Reibrolle (3) sich in Richtung des Zwischenraumes zwischen den beiden Rädern (1) eines Rades (2) erstreckt.

8. Verfahren nach einem der Ansprüche 4 bis 7, dadurch gekennzeichnet, daß die für den Kontakt mit der Spurkranzkuppe (20) vorgesehenen Oberflächenbereiche der Reibrollen (3,3') in mindestens Teilen ihrer Breitenerstreckung aufgerauht oder mit einem feilenartigen Profil (32) versehen sind.

## Claims

1. Method for machining a wheel set received in centring means and driven by way of friction rollers placed on the peripheral surface of a wheel, characterised in that the wheel set (2) is driven and/or supported by at least one friction roller (3) placed on the wheel flange (27) of at least one wheel (1) of a wheel set (2) with a locating force, which friction roller is able owing to the locating force to follow radial positional changes of the respective instantaneous contact surface, while at least one reprofiling cut using a lathe tool (5) is carried out on the end surface of a wheel (1) remote from the wheel flange (27) without interruption at least as far as the highest point of the wheel flange projection (20) to be produced by the reprofiling, following which the remaining machining is carried out on the wheel flange (27).

2. Method according to claim 1, characterised in that the remaining machining is commenced at the wheel flange projection (20) and continued along the inner wheel flange flank (22).

3. Method according to claim 1, characterised in that the remaining machining is commenced at the inner wheel flange flank (22) and is continued as far as the highest point of the wheel flange projection (20).

4. Method according to any of the claims 1 to 3, characterised in that at least one friction roller is positioned axially such that it can be brought into position at the wheel flange (27).

5. Method according to any of the aforementioned claims, characterised in that for receiving a wheel flange projection (20) a groove (29), which corresponds at least approximately to the desired cross-section contour of the wheel flange projection (20), is provided on at least one friction roller (3, 3').

6. Method according to claim 5, characterised in that only a half groove (30) is formed in the cross-section on the friction roller (3), so that the groove base continues into a cylindrical portion (31) of friction roller (3).

7. Method according to claim 6, characterised in that the cylindrical portion (31) adjacent to the groove base and at least of one friction roller (3) extends in the direction of the intermediate space between the two wheels (1) of a wheel (2).

8. Method according to any of claims 4 to 7, characterised in that the surface regions of the friction rollers (3, 3') provided for contacting the wheel flange projection (20) are roughened in at least parts of their width extension or are provided with a file-like profile (32).

## Revendications

1. Procédé pour l'usinage par enlèvement de copeaux d'un jeu de roues logé dans des moyens de centrage et entraîné par l'intermédiaire de galets de friction appliqués contre la surface périphérique d'une roue, caractérisé en ce que le jeu de roues (2) est entraîné et/ou supporté par au moins un galet de friction (3) qui est appliqué avec une force d'application contre le boudin (27) d'au moins une roue (1) d'un jeu de roues (2) et qui, soumis à une force d'application, peut suivre les variations de position radiales de la surface de contact du moment, tandis qu'au moins une coupe de reprofilage de la face frontale d'une roue (1) opposée au boudin (27), réalisée avec un outil de tournage (5), est effectuée sans interruption au moins jusqu'au sommet de l'arrondi de boudin (20) à réaliser grâce au profilage, après quoi on réalise le reste de l'enlèvement de copeaux sur le boudin (27).

2. Procédé selon la revendication 1, caractérisé en ce que le reste de l'enlèvement de copeaux commence sur l'arrondi de boudin (20) et continue le long du flanc intérieur de boudin (22).

3. Procédé selon la revendication 1, caractérisé en ce que le reste de l'enlèvement de copeaux commence sur le flanc intérieur de boudin (22) et continue jusqu'au sommet de l'arrondi de boudin (20).

4. Procédé selon l'une des revendications 1 à 3, caractérisé en ce qu'au moins un galet de friction est positionné axialement de manière à pouvoir être amené contre le boudin (27).

5. Procédé selon l'une des revendications précédentes, caractérisé en ce qu'il est prévu, pour au moins un galet de friction (3, 3'), une rainure (29) correspondant au moins approximativement au contour de section transversale prescrit de l'arrondi de boudin (20) et destinée à recevoir un arrondi de boudin (20).

6. Procédé selon la revendication 5, caractérisé en ce qu'une demi-rainure (30) seulement, en section transversale, est formée sur le galet de friction (3), de sorte que le fond de la rainure se prolonge par une section cylindrique (31) du galet de friction (3).

7. Procédé selon la revendication 6, caractérisé en ce que la section cylindrique (31) d'au moins un galet de friction (3) qui prolonge le fond de la rainure s'étend en direction de l'intervalle défini entre les deux roues (1) d'un jeu de roues (2).

8. Procédé selon l'une des revendications 4 à 7, caractérisé en ce que les zones de surface des galets de friction (3, 3') qui sont prévues pour le contact avec l'arrondi de boudin (20) sont rendues rugueuses sur des parties au moins de leur extension en largeur, ou sont pourvues d'un profit en forme de lime (32).
